# EUROPÄISCHE PATENTSCHRIFT

(11) **EP 2 956 890 B1**
(45) Veröffentlichungstag und Bekanntmachung des Hinweises auf die Patenterteilung: **08.01.2020**
(21) Anmeldenummer: 14703884.8
(22) Anmeldetag: 12.02.2014
(51) Int. Cl.: G06K 9/00, G07C 9/00, G06F 21/32

(54) **VERFAHREN UND SYSTEM ZUR BEREITSTELLUNG EINER FUNKTION EINES IDENTITÄTSTRÄGERS**
METHOD AND SYSTEM FOR PROVIDING A FUNCTION OF AN IDENTITY MEDIUM
PROCÉDÉ ET SYSTÈME DE MISE À DISPOSITION D'UNE FONCTION D'UN SUPPORT D'IDENTITÉ

(30) Priorität: 13.02.2013 DE 102013202305
(43) Veröffentlichungstag der Anmeldung: 23.12.2015
(73) Patentinhaber: Bundesdruckerei GmbH, 10969 Berlin (DE)
(72) Erfinder: FUMY, Walter, 91052 Erlangen (DE); BARTOCHA, Alexa, 10777 Berlin (DE); DONATH,Björn, Berlin 10827 (DE); FISCHER, Jörg, 13053 Berlin (DE); HEIDRICH, Josephine, 16359 Biesenthal (DE); KULIKOVSKA, Olga, 14165 Berlin (DE); WEDEKIND, Torben, 15732 Eichwalde (DE)
(74) Vertreter: Ramrath, Lukas
(86) Internationale Anmeldenummer: PCT/EP2014/052728
(87) Internationale Veröffentlichungsnummer: WO 2014/124968

(56) Entgegenhaltungen:
- EP-A1- 0 699 325
- WO-A1-2012/014304
- US-A1- 2004 064 728
- US-A1- 2004 064 728
- US-A1- 2007 198 850
- US-A1- 2009 106 820
- US-A1- 2009 201 128
- US-B1- 6 490 443

## Beschreibung

Die Erfindung betrifft ein Verfahren und ein System zur Bereitstellung einer Funktion eines Identitätsträgers.

Elektronische Identitäten bestehen im Allgemeinen aus drei Komponenten: einer Kennung, z.B. einer Personalnummer, einem Identitätsträger, z.B. einem Mitarbeiterausweis, und einer zugehörigen Entität, z.B. einem Mitarbeiter. Für die Sicherheit von Identifikationssystemen ist u.a. eine möglichst starke Bindung zwischen der Kennung und dem Identitätsträger bzw. zwischen dem Identitätsträger und der Entität wesentlich. Die Bindung zwischen dem Identitätsträger und der Entität wird vielfach durch eine PIN (Personal Identification Number) realisiert. Entitäten können z.B. Personen, andere Lebewesen, Objekte, Prozesse oder Organisationen sein.

Die nachveröffentlichte DE 10 2012 201 016.5 offenbart ein Verfahren und eine Vorrichtung zum Bereitstellen und Nutzen eines so genannten PUF-Schlüssels, der anhand eines Sicherheitsdokuments hergestellt wird. Die Buchstabenfolge PUF ist ein Akronym des Begriffs Physical Unclonable Function. Übersetzt bedeutet dies physikalisch nicht duplizierbare Funktion. Hierdurch soll ausgedrückt werden, dass ein bestimmtes Merkmal oder eine bestimmte Eigenschaft eines Gegenstands durch eine kontrollierte Herstellung nicht duplizierbar oder gezielt herstellbar ist. In dem vorgeschlagenen Verfahren wird ein PUF-Schlüssel in Abhängigkeit von Eigenschaften eines Dokuments erzeugt. Weiter ist offenbart, dass eine PIN erfasst wird und zur Ver- oder Entschlüsselung von Daten, die in dem Dokument gespeichert sein können, genutzt wird.

Die US 2004/064728 A1 offenbart eine Sicherheitsvorrichtung zur Beschränkung des Zugangs zu verschiedenen Maschinen, Orte oder Daten, mit einer Sicherheitseinrichtung, die in unmittelbarer Nähe zu einem Teil des Körpers einer Person gehalten und aktiviert wird, um den Zugang zu diesen Maschinen, Orte oder Daten zu ermöglichen, wenn die Person als bestimmte Person bestätigt wird, und die automatisch deaktiviert wird, wenn sie aufhört, in unmittelbarer Nähe zum Körper der Person sein.

Die US 2009/106820 A1 offenbart ein System für eine Benutzerauthentifizierung, das eine Geruchssensoreinheit zum Erfassen eines Geruchs des Körpers eines Benutzers umfasst, um biometrischen Informationsvektor zu erzeugen.

Die US 2007/198850 A1 offenbart ein mehrstufiges Prüfungssystem mit einem ersten und zweiten Erkennungseinrichtung, um die Identität des Benutzers zu überprüfen und um zu bestimmen, ob der Benutzer unter Zwang steht.

Die EP 0 699 325 A1 offenbart einen Fingerabdrucksensor.

Die US 2009/201128 A1 offenbart eine Transaktionsauthentifizierungskarte.

Es stellt sich das technische Problem, ein Verfahren und ein System zur Bereitstellung einer Funktion eines Identitätsträgers zu schaffen, welche z.B. die Sicherheit einer Authentifizierung mittels des Identitätsträgers erhöhen und insbesondere eine starke Bindung zwischen einer zur Führung des Identitätsträgers autorisierten Entität und dem Identitätsträger herstellen können.

Die Lösung des technischen Problems ergibt sich durch die Gegenstände mit den Merkmalen der Ansprüche 1 und 7. Weitere vorteilhafte Ausgestaltungen der Erfindung ergeben sich aus den Unteransprüchen.

Vorgeschlagen wird ein Verfahren zur Bereitstellung mindestens einer Funktion eines Identitätsträgers.

Es ist eine Grundidee der Erfindung, dass mindestens eine Funktion oder Funktionalität, insbesondere eine Authentifizierungsfunktion, eines Identitätsträgers deaktiviert wird, falls die zur Führung des Identitätsträgers autorisierte Entität, z.B. eine Person, sich nicht in der Nähe, beispielsweise in einem vorbestimmten Umfeld, des Identitätsträgers befindet, wobei die zur Führung des Identitätsträgers autorisierte Entität identifiziert wird, indem ein Erfassungsbereich eines Sensors auf mindestens ein entitätspezifisches Merkmal hin überwacht wird. Alternativ erfolgt eine Aktivierung der Funktion oder Funktionalität, falls die zur Führung des Identitätsträgers autorisierte Entität, z.B. eine Person, sich in der Nähe des Identitätsträgers befindet.

Die Überwachung erfolgt hierbei aktionsunabhängig, d.h. dass die Entität keinerlei Aktivierungstätigkeit oder-aktion, wie z.B. eine Eingabe eines PIN, vornehmen muss. Wird die zur Führung des Identitätsträgers autorisierte Entität im Erfassungsbereich nicht detektiert oder ist der räumliche Abstand größer als ein vorbestimmter Abstand, so erfolgt eine Deaktivierung der Funktion, wodurch eine Ausführung oder Durchführung der Funktion verhindert wird. Beispielsweise können eine Authentifizierung des Identitätsträgers sowie alle anderen Anwendungen des Identitätsträgers verhindert werden.

Ein Identitätsträger bezeichnet hierbei eine Vorrichtung, auf oder in der identitätsbezogene Daten einer zur Führung des Identitätsträgers autorisierten Person oder Entität gespeichert sein können. Beispielsweise kann der Identitätsträger ein Sicherheitsdokument sein, z.B. ID-Dokument, ein Personalausweis, ein Reisepass, ein Zutrittskontrollausweis, ein Mitarbeiterausweis, eine Bankkarte, ein Führerschein, ein Kraftfahrzeugdokument, eine Gesundheitskarte oder ein sonstiger Träger mit Ausweisfunktion. Z.B. kann der Identitätsträger in diesem Falle als Kunststoffkartenkörper mit vorbestimmten Dimensionen ausgebildet sein. Jedoch ist ein Formfaktor der körperlichen Ausbildung des Identitätsträgers beliebig. So kann der Identitätsträger beispielsweise auch als Uhr, Gürtel, Kette oder als ein sonstiger, vorzugsweise portabler, Gegenstand ausgebildet sein oder in einen solchen Gegenstand integriert sein.

Eine Funktion des Identitätsträgers kann hierbei eine Funktion bezeichnen, die durch zumindest ein Teil oder Element des Identitätsträgers durchgeführt oder unterstützt werden kann. Beispielsweise kann die Funktion eine Signaturfunktion sein. Auch kann die Funktion eine Verschlüsselungs- und/oder Entschlüsselungsfunktion sein. Eine Funktion kann hierbei auch als (Teil einer) Operation bezeichnet werden, die durch zumindest einen Teil oder Element des Identitätsträgers durchgeführt oder unterstützt werden kann.

Eine zur Führung des Identitätsträgers autorisierte Entität weist mindestens ein entitätsspezifisches Merkmal auf. Insbesondere kann sich die vorgeschlagene Lehre auf Personen, andere Lebewesen, sowie Objekte als Entitäten beschränken. Beispielsweise kann die zur Führung des Identitätsträgers autorisierte Entität eine Person sein, die folglich mindestens ein personenspezifisches Merkmal aufweist. Dieses Merkmal kann, wie nachfolgend näher erläutert, ein biometrisches Merkmal sein. Beispielsweise kann die zur Führung des Identitätsträgers autorisierte Entität aber auch ein Objekt sein, das folglich mindestens ein objektspezifisches Merkmal aufweist.

Dieses Merkmal kann insbesondere ein PUF-Merkmal, also ein nicht duplizierbares Merkmal, sein, wie es z.B. in der DE 10 2012 201 016.5 beschrieben ist. Daher wird auf deren Offenbarung bezüglich eines PUF-Merkmals verwiesen. Dieses Merkmal kann somit ein einmaliges Merkmal sein.

Mindestens eine Erfassungseinrichtung überwacht einen der Erfassungseinrichtung zugeordneten Erfassungsbereich auf das zumindest eine entitätsspezifische Merkmal hin.

Weiter wird ein räumlicher Abstand zwischen der Erfassungseinrichtung und der Entität bestimmt. Die Bestimmung des Abstands kann erfolgen, wenn das mindestens eine entitätsspezifische Merkmal detektiert und gegebenenfalls verifiziert wurde.
Der räumliche Abstand kann beispielsweise erst dann bestimmt werden, wenn das mindestens eine entitätsspezifische Merkmal detektiert wurde.

Hierbei umfasst die Bestimmung eines räumlichen Abstands eine Bestimmung eines einzelnen Werts des Abstands und/oder die Bestimmung eines Wertebereichs für den Abstand. Wird ein Wertebereich für den Abstand bestimmt, so kann der räumliche Abstand in Abhängigkeit des Wertebereichs bestimmt werden, z.B. als minimaler, mittlerer oder als maximaler Wert des Wertebereichs. Die Bestimmung des räumlichen Abstands ermöglicht hierbei z.B. die Bestimmung, ob sich die Entität in einem vorbestimmten Umkreis um die Erfassungseinrichtung herum befindet oder ob sich die Entität in einem vorbestimmten Umkreis um den Identitätsträger herum befindet.

Insbesondere kann die Bestimmung des Abstands auch in Abhängigkeit der Detektion des entitätsspezifischen Merkmals erfolgen. Z.B. kann der räumliche Abstand als vorbestimmter Wert oder als in einem vorbestimmten Wertebereich liegend bestimmt werden, falls das entitätsspezifische Merkmal detektiert wird. Auch kann der räumliche Abstand als vorbestimmter Wert oder als in einem vorbestimmten Wertebereich liegend bestimmt werden, falls das entitätsspezifische Merkmal mit einer Intensität detektiert wird, die höher als ein vorbestimmter Schwellwert ist. Beispielsweise können verschiedenen Schwellwerten verschiedene vorbestimmte Werte oder verschiedene vorbestimmte Wertebereiche zugeordnet sein. Somit kann bei einer Detektion auch der räumliche Abstand ohne eine gesondert durchzuführende Abstandsmessung bestimmt werden. Der vorbestimmte Wert oder der vorbestimmte Wertebereich kann hierbei abhängig von mindestens einer Eigenschaft einer Abstandserfassungseinrichtung sein, insbesondere abhängig von einer Ausbildung, insbesondere einer Größe und/oder einer Ausrichtung, eines Erfassungsbereichs und/oder einer Sensibilität der Abstandserfassungseinrichtung. Erfindungsgemäß ist die Abstandserfassungseinrichtung gleich der Erfassungseinrichtung für das zumindest eine entitätsspezifische Merkmal.

Beispielsweise kann also ein räumlicher Abstand zwischen der Erfassungseinrichtung und der zur Führung des Identitätsträgers autorisierten Person bestimmt werden. Die Erfassungseinrichtung ist auf, in oder an dem Identitätsträger angeordnet, wobei der räumliche Abstand zwischen Erfassungseinrichtung und Entität dem räumlichen Abstand zwischen Identitätsträger und Entität entspricht.

Hierbei kann die Bestimmung des räumlichen Abstands auf Grundlage desselben Messprinzips erfolgen, das auch zur Überwachung des Erfassungsbereiches der Erfassungseinrichtung verwendet wird. Ist die Erfassungseinrichtung z.B. eine optische Erfassungseinrichtung, so kann auch die Bestimmung des Abstandes optisch erfolgen. Vorzugsweise erfolgt die Bestimmung des Abstandes in diesem Fall gleichzeitig zur Überwachung und Detektion oder der Abstand wird implizit bei der Überwachung und Detektion mitbestimmt.

Es ist jedoch auch vorstellbar, dass die Überwachung und Detektion sowie die Bestimmung des räumlichen Abstands auf Grundlage von voneinander verschiedenen Messprinzipien und/oder zeitlich versetzt erfolgen.

Die Erfassungseinrichtung kann beispielsweise ein Sensor sein, der einen vorbestimmten Erfassungsbereich aufweist. Hierbei kann der Sensor innerhalb seines Erfassungsbereichs befindliche Gegenstände und/oder Personen detektieren und vorbestimmte Merkmale dieser Gegenstände und/oder Personen erfassen.

Die vorhergehend erläuterte Funktion des Identitätsträgers wird deaktiviert, falls das mindestens eine entitätsspezifische Merkmal nicht detektiert und gegebenenfalls verifiziert wurde und/oder der räumliche Abstand größer als ein vorbestimmter Abstand ist. In diesem Fall wird die mindestens eine Funktion oder Funktionalität nicht bereitgestellt oder zur Verfügung gestellt, sodass diese Funktion von dem Identitätsträger nicht durchgeführt oder unterstützt werden kann. Alternativ wird die Funktion des Identitätsträgers aktiviert, falls das mindestens eine entitätsspezifische Merkmal detektiert wurde und der räumliche Abstand kleiner als ein vorbestimmter Abstand oder gleich einem vorbestimmten Abstand ist. In diesem Fall wird die mindestens eine Funktion oder Funktionalität bereitgestellt oder zur Verfügung gestellt, sodass diese Funktion von dem Identitätsträger durchgeführt oder unterstützt werden kann.

Beispielsweise kann ein Ausgangssignal der Erfassungseinrichtung mittels einer Auswerteeinrichtung ausgewertet werden, wobei in Abhängigkeit des erzeugten Ausgangssignals bestimmt wird, ob sich das mindestens eine entitätsspezifische Merkmal im Erfassungsbereich befindet. Ist dies nicht der Fall, so kann davon ausgegangen werden, dass die zur Führung des Identitätsträgers autorisierte Entität sich nicht im Erfassungsbereich befindet, und, durch die nachfolgende Deaktivierung, eine unautorisierte Authentifizierung verhindert werden.

Durch die Prüfung des räumlichen Abstands und dem Vergleich mit einem Referenzabstand kann bestimmt werden, ob sich die zur Führung autorisierte Entität in einem vorbestimmten Umfeld um die Erfassungseinrichtung herum befindet. Somit kann in vorteilhafter Weise sichergestellt werden, dass sich die zur Führung autorisierte Entität nicht zu weit von der Erfassungseinrichtung entfernt befindet. Ist die Erfassungseinrichtung auf, an oder in dem Identitätsträger angeordnet, so kann in vorteilhafter Weise sichergestellt werden, dass sich die zur Führung autorisierte Entität nicht derart weit von der Identitätsträger entfernt befindet, dass der Identitätsträger nicht von der zur Führung autorisierten Entität z.B. in der Hand gehalten werden kann.

Die Erfassungseinrichtung und eine gegebenenfalls vorhandene, von der Erfassungseinrichtung verschiedene, Abstandserfassungseinrichtung können hierbei beispielsweise auf dem Identitätsträger oder in dem Identitätsträger oder, wie nachfolgend näher erläutert, auf einem Sensorträger angeordnet sein.

Hierbei führt die Erfassungseinrichtung eine von einer Aktivierungs- oder Zugriffsaktion der Entität, beispielsweise von einer Eingabe eines PIN oder von einer Auflage eines Fingers zur Fingerabdruckserkennung, unabhängige (De-)Aktivierung der Funktion durch. Die Aktivierungs- oder Zugriffsaktion bezeichnet hierbei eine Aktion, die, z.B. teilweise manuell, durchgeführt werden muss, um eine gewünschte Funktion zu aktivieren, wobei erst nach der Aktivierung die Funktion ausführbar ist.

Eine Überwachung des Erfassungsbereichs und eine Detektion des mindestens einen entitätsspezifischen Merkmals erfolgt hierbei also unabhängig von einem Verhalten der Entität während der Überwachung.

Hierdurch ergibt sich in vorteilhafter Weise, dass eine, mehrere vorbestimmte oder alle Funktion(en) des Identitätsträgers nur dann durchgeführt oder unterstützt wird/werden, wenn sich die zur Führung autorisierte Entität in einem gewünschten Umfeld um die Erfassungseinrichtung herum befindet. Hierdurch wird in vorteilhafter Weise ein Missbrauch des Identitätsträgers erschwert oder gar verhindert.

Weiter ist es durch die von einer Aktivierungsaktion unabhängige Überwachung mittels der Erfassungseinrichtung nicht notwendig, dass die zur Führung autorisierte Entität mit einer gesonderten, von ihr durchzuführenden Handlung freigeben oder freischalten muss. Hierdurch wird eine Freigabe mindestens einer Funktion erleichtert, insbesondere weniger zeitintensiv.

In einer bevorzugten Ausführungsform wird eine Authentifizierungsfunktion des Identitätsträgers deaktiviert, falls das mindestens eine entitätsspezifische Merkmal nicht detektiert wurde und/oder der räumliche Abstand größer als ein vorbestimmter Abstand ist.

Der Identitätsträger ist hierbei derart ausgebildet, dass er zumindest eine Authentifizierungsfunktion unterstützen kann. Beispielsweise kann von einer externen Prüfstelle eine Authentifizierungsanfrage an den Identitätsträger gesendet werden. In Abhängigkeit der Authentifizierungsanfrage kann durch die Authentifizierungsfunktion des Identitätsträgers eine Authentifizierungsantwort generiert werden, die z.B. an die Prüfstelle zurück übertragen wird. Die Prüfstelle kann in Abhängigkeit der Authentifizierungsantwort verifizieren, ob eine vorbestimmte, erwartete Authentifizierungsfunktion durchgeführt wurde und auf Grundlage des Ergebnisses den die Entität authentifizieren, die den Identitätsträger als Hilfsmittel benutzt.

Die Authentifizierungsfunktion stellt somit eine identitätsträgerspezifische Funktion dar, die zur möglichst eindeutigen Authentifizierung des Identitätsträgers dient.

Hierdurch ergibt sich in vorteilhafter Weise, dass der Identitätsträger nur dann zur Authentifizierung benutzt werden kann, wenn sich die zur Führung autorisierte Entität in einem gewünschten Umfeld um die Erfassungseinrichtung herum befindet. Hierdurch wird in vorteilhafter Weise ein Missbrauch des Identitätsträgers erschwert oder gar verhindert.

Weiter ist es durch die von einer Authentifizierungsaktion unabhängige Überwachung mittels der Erfassungseinrichtung nicht notwendig, dass die zur Führung autorisierte Entität mit einer gesonderten, von ihr durchzuführenden Handlung freigeben oder freischalten muss. Hierdurch wird eine Authentifizierung erleichtert, insbesondere weniger zeitintensiv.

In einer weiteren Ausführungsform wird mittels der Erfassungseinrichtung mindestens ein biometrisches Merkmal erfasst. Hierbei kann die Erfassungseinrichtung als biometrische Erfassungseinrichtung ausgebildet sein. Diese dient zur Erfassung eines biometrischen Merkmals oder mehrerer biometrischer Merkmale, wie z.B. einer Körpergröße, einer Iris, einer Retina, einer Gesichtsgeometrie, eines Fingerabdrucks, einer Finger- oder Handvenenstruktur, einer Ohrform, einer Stimme, einer Lippenbewegung, eines Körpergeruchs, Schweiß und/oder einer DNA. Selbstverständlich können auch weitere biometrische Merkmale erfasst werden. Diese Merkmale weisen vorzugsweise Eigenschaften mit einer guten Messbarkeit, einer Universalität, einer Einmaligkeit und einer Konstanz auf.

Durch die Erfassung biometrischer Merkmale wird eine möglichst eindeutige und sichere Identifizierung bzw. Detektion des entitätsspezifischen Merkmals gewährleistet. Hierdurch wird eine besonders starke Bindung zwischen dem Identitätsträger und der zur Führung dieses Identitätsträgers autorisierten Entität ermöglicht.

In einer bevorzugten Ausführungsform wird das mindestens eine biometrische Merkmal geruchsbasiert erfasst. Hierzu kann die Erfassungseinrichtung als Geruchssensor ausgebildet sein. Ein Geruchssensor bezeichnet hierbei ein technisches System zur Messung von Gerüchen. Beispielsweise kann ein solches System mikroelektronische Gassensoren umfassen, die eine Konzentration von vorbestimmten Stoffen oder Gasen in einen dem Geruchssensor zugeordneten Erfassungsbereich messen und entsprechende Ausgangssignale erzeugen. Das mindestens eine entitätsspezifische Merkmal kann hierbei ein Körpergeruch der zur Führung des Identitätsträgers autorisierten Person sein.

Als Körpergeruch können alle riechbaren Körperausdünstungen von Menschen über die Haut und im weiteren Sinne auch aus anderen Körperöffnungen bezeichnet werden. Da jede Person einen genetisch festgelegten, individuell einzigartigen Körpergeruch besitzt, ergibt sich hierdurch in vorteilhafter Weise eine besonders starke Bindung zwischen dem Identitätsträger und der autorisierten Entität, wodurch wiederum die Möglichkeit eines Missbrauchs minimiert wird.

In einer alternativen Ausführungsform wird das mindestens eine biometrische Merkmal optisch erfasst. In diesem Fall kann die Erfassungseinrichtung als optischer Sensor ausgebildet sein. Ein optischer Sensor bezeichnet hierbei ein technisches System zur Erzeugung eines Abbilds eines dem optischen Sensor zugeordneten Erfassungsbereiches, wobei das Abbild z.B. durch elektrische Signale repräsentiert werden kann. Auch kann der optische Sensor optische Elemente, wie z.B. Linsen, Spiegel oder andere optische Elemente umfassen, die zur Erzeugung des Abbilds von einem möglichst großen Erfassungsbereich notwendig sind. So ist z.B. vorstellbar, dass der optische Sensor ein künstliches Facettenauge umfasst. Auch kann der optische Sensor ein so genanntes Fischaugen-Objektiv umfassen.

Ein optisch erfassbares biometrisches Merkmal kann beispielsweise eine Gesichtsgeometrie, eine Iris, eine Retina, ein Fingerabdruck oder weitere körperliche Merkmale einer Person sein.

Insgesamt weist die Erfassungseinrichtung vorzugsweise einen möglichst großen Erfassungsbereich auf. Hierdurch ergibt sich in vorteilhafter Weise, dass zur Detektion des entitätsspezifischen Merkmals keine vorbestimmte Ausrichtung des Identitätsträgers bzw. einer darauf oder darin angeordneten Erfassungseinrichtung zur Entität gewährleistet sein muss.

Selbstverständlich ist es auch vorstellbar, dass das mindestens eine biometrische Merkmal elektrisch, akustisch, kapazitiv, induktiv oder in sonstiger Weise bestimmt wird. Hierzu ist die Erfassungseinrichtung als entsprechender Sensor auszubilden.

Weiter ist vorstellbar, dass das entitätsspezifische Merkmal berührungslos erfasst werden kann. Hierdurch ergibt sich in vorteilhafter Weise ein möglichst großer Erfassungsbereich der Erfassungseinrichtung. Es ist jedoch auch vorstellbar, dass das mindestens eine entitätsspezifische Merkmal nur dann detektiert werden kann, falls eine Berührung, also ein mechanischer Kontakt, zwischen der Erfassungseinrichtung und der zur Führung autorisierten Entität hergestellt ist. So ist z.B. auch vorstellbar, dass das mindestens eine entitätsspezifische Merkmal elektrisch bestimmt wird, beispielsweise durch das Erfassen und Auswerten von EEG-Signalen oder eine elektrische Erfassung weiterer Vitalitätsfunktionen.

In einer weiteren Ausführungsform erfolgt eine Überwachung kontinuierlich. Eine kontinuierliche Überwachung bedeutet hierbei, dass die Erfassungseinrichtung den Erfassungsbereich kontinuierlich überwacht. Hierdurch ergibt sich in vorteilhafter Weise eine möglichst zeitnahe Deaktivierung der Funktion, falls sich die zur Führung autorisierte Entität weiter als mit dem vorbestimmten Abstand von dem Identitätsträger bzw. der Erfassungseinrichtung entfernt befindet.

Alternativ erfolgt eine Überwachung nach einer Aktivierung der Überwachung. Eine Aktivierung der Überwachung kann beispielsweise erfolgen, falls eine Anfrage, insbesondere eine Authentifizierungsanfrage, an die Erfassungseinrichtung gesendet wird. Ist die Erfassungseinrichtung auf, in oder an dem Identitätsträger angeordnet, so kann die Anfrage auch an den Identitätsträger gesendet werden. Nach Empfang der Anfrage kann dann die Erfassungseinrichtung z.B. von einer ebenfalls auf dem Identitätsträger angeordneten Steuer- und Auswerteeinrichtung aktiviert werden. Selbstverständlich kann die Überwachung ausschließlich dann aktiviert werden, falls eine vorbestimmte Anfrage über vorbestimmte Kommunikationskanäle an die Erfassungseinrichtung gesendet wird. Dies erhöht eine Betriebssicherheit.

Hierdurch ergibt sich in vorteilhafter Weise, dass ein zur Überwachung benötigte Energieverbrauch reduziert wird.

Zum Betrieb der Erfassungseinrichtung kann hierbei Energie verbraucht werden. So kann die Erfassungseinrichtung energietechnisch mit geeigneten Energiespeichern gekoppelt sein, die beispielsweise ebenfalls auf dem Identitätsträger oder dem nachfolgend näher erläuterten Sensorträger angeordnet sein können. Auch ist jedoch vorstellbar, dass Energie von außerhalb zur Erfassungseinrichtung übertragen wird, z.B. induktiv. So kann beispielsweise im Falle einer Anfrage eine induktive Energieübertragung von einer externen Energiequelle zur Erfassungseinrichtung erfolgen, wobei die Überwachung des Erfassungsbereichs nach der Aktivierung unter Verbrauch der induktiv übertragenen Energie erfolgt.

Die Aktivierung kann hierbei beispielsweise durch eine externe Prüfeinrichtung, beispielsweise ein Dokumentenprüfgerät, durchgeführt werden. Beispielsweise kann die externe Prüfeinrichtung eine Aktivierungs- oder Zugriffsaktion durchführen und eine entsprechende Aktivierungs- oder Zugriffsanfrage an die Erfassungseinrichtung oder den Identitätsträger senden. So kann beispielsweise die externe Prüfeinrichtung eine Authentifizierungsanfrage an den Identitätsträger senden.

Weiter beschrieben wird, dass die Erfassungseinrichtung auf einem Sensorträger angeordnet ist, wobei der Sensorträger als von dem Identitätsträger verschiedenes Bauteil ausgebildet ist.

In diesem Falle ergibt sich ein zweiteiliges, nachfolgend noch näher erläutertes, System, welches den Identitätsträger und den Sensorträger umfasst. Der Sensorträger kann hierbei ein Gegenstand sein, den die zur Führung des Identitätsträgers autorisierte Person dauerhaft oder in der Regel mit sich führt oder am Körper trägt. So kann der Sensorträger beispielsweise als Uhr, Kette, Brille, Armband, Ring, Ohrring, Gürtel oder sonstiger Gegenstand, vorzugsweise portabler Gegenstand, ausgebildet sein. Hierdurch wird in vorteilhafter Weise sichergestellt, dass sich die zur Führung autorisierte Entität oder ein Teil der Entität möglichst in einem vorbestimmten Erfassungsbereich der Erfassungseinrichtung befindet, wodurch eine Detektion des entitätsspezifischen Merkmals erleichtert wird.

Alternativ kann der Sensorträger auch ortsfest angeordnet sein. Insbesondere kann der Sensorträger die vorhergehend erläuterte externe Prüfeinrichtung sein. In diesem Fall kann die Erfassungseinrichtung in die Prüfeinrichtung, beispielsweise ein Dokumentenprüfgerät, eingebaut sein.

Weiter können sowohl der Identitätsträger als auch der Sensorträger Sende- und/oder Empfangseinrichtungen aufweisen, die eine signal- oder datentechnische Kommunikation zwischen dem Identitätsträger und dem Sensorträger ermöglichen. Hierdurch kann die Erfassungseinrichtung Signale der Erfassungseinrichtung an den Identitätsträger senden.

Beispielsweise kann die Erfassungseinrichtung einen Abstand und/oder ein detektiertes entitätsspezifisches Merkmal zum Identitätsträger übertragen. Alternativ kann die Erfassungseinrichtung ausschließlich Ausgangssignale der Erfassungseinrichtung an den Identitätsträger übertragen, wobei dann, z.B. mittels einer Auswerteeinrichtung, das entitätsspezifisches Merkmal und/oder der Abstand in Abhängigkeit der Ausgangssignale bestimmt wird/werden. In diesem Fall erfolgt die Auswertung der Ausgangssignale der Erfassungseinrichtung ausschließlich identitätsträgersseitig. In diesem Fall wertet z.B. die Prüfeinrichtung die Ausgangssignale weder aus, noch führt sie einen Vergleich der Signale mit z.B. einer Datenbank durch.

Somit kann der Identitätsträger in Abhängigkeit der Auswertung die mindestens eine Funktion bereitstellen. Alternativ können die Ausgangssignale der Erfassungseinrichtung als Schlüssel zur Kommunikation zwischen Erfassungseinrichtung und Identitätsträger dienen. Eine Bereitstellung der Funktion durch den Identitätsträger erfolgt in diesem Fall nur dann, falls ein vorbestimmter Schlüssel, der in Abhängigkeit von Abstand und/oder entitätsspezifischem Merkmal erzeugt wurde, zur Verschlüsselung verwendet wurde.

In diesem zweiteiligen System kann entweder der räumliche Abstand zwischen der Erfassungseinrichtung und der Entität oder der räumliche Abstand zwischen dem Identitätsträger und der Entität bestimmt und mit dem vorbestimmten Abstand verglichen werden.

Beispielsweise kann auch der räumliche Abstand zwischen dem Identitätsträger und der Entität als zusammengesetzter Abstand bestimmt werden, der sich aus dem Abstand zwischen Erfassungseinrichtung und Entität sowie dem Abstand zwischen Identitätsträger und Erfassungseinrichtung zusammensetzt. Hierbei kann der Abstand zwischen Identitätsträger und Erfassungseinrichtung durch eine Abstandserfassungseinrichtung bestimmt werden. Diese kann beispielsweise den Abstand in Abhängigkeit einer Intensität von Funksignalen bestimmen, die zwischen Identitätsträger und Erfassungseinrichtung übertragen werden. Jedoch sind auch andere Verfahren zur Abstandserfassung vorstellbar. Alternativ kann der Abstand zwischen Entität und Identitätsträger direkt bestimmt werden.

Hierdurch kann sichergestellt werden, dass sich die autorisierte Entität in einem vorbestimmten Umfeld um den Identitätsträger herum befindet.

Beispielsweise kann die Erfassungseinrichtung in diesem Fall eine berührungsbasierte Erfassungseinrichtung sein, beispielsweise ein elektrischer Sensor zur Erfassung eines EEG-Signals.

Durch die Ausbildung als zweiteiliges System ergibt sich in vorteilhafter Weise eine verbesserte Anwendbarkeit und erhöhte Einsatzfähigkeit des Verfahrens, da durch den Sensorträger bzw. die Anordnung des Sensorträgers relativ zur autorisierten Entität gewährleistet wird, dass sich die Entität oder ein vorbestimmter Teil der Entität mit hoher Wahrscheinlichkeit im Erfassungsbereich der Erfassungseinrichtung befindet.

Weiter kann der vorbestimmte Abstand in einer Aktivierungs- oder Zugriffsanfrage, insbesondere in einer Authentifizierungsanfrage, codiert an den Identitätsträger übertragen werden. Beispielsweise kann eine Prüfeinrichtung vorgeben, mit welchem maximal zulässigen Abstand sich die zur Führung autorisierte Entität von der Erfassungseinrichtung entfernt befinden darf, damit eine Authentifizierung mittels des Identitätsträgers möglich ist. Hierdurch ergibt sich in vorteilhafter Weise, dass ein anwendungsspezifischer Abstand im vorgeschlagenen Verfahren verwendet werden kann.

Weiter vorgeschlagen wird ein System zur Bereitstellung mindestens einer Funktion eines Identitätsträgers, wobei das System mindestens einen Identitätsträger, mindestens eine Erfassungseinrichtung und mindestens eine Auswerteeinrichtung umfasst. Mittels der mindestens einen Erfassungseinrichtung ist ein der Erfassungseinrichtung zugeordneter Erfassungsbereich auf mindestens ein entitätsspezifisches Merkmal hin überwachbar, wobei das entitätsspezifische Merkmal einer zur Führung des Identitätsträgers autorisierten Entität zugeordnet ist.

Mittels der Auswerteeinrichtung ist das mindestens eine entitätsspezifische Merkmal detektierbar. Beispielsweise kann die Auswerteeinrichtung Ausgangssignale der Erfassungseinrichtung auswerten. Weiter ist ein räumlicher Abstand zwischen der Erfassungseinrichtung und der Entität bestimmbar. Das System kann hierfür eine Abstandserfassungseinrichtung aufweisen, die von der vorhergehend erläuterten Erfassungseinrichtung verschieden sein kann. In diesem Falle kann die Auswerteeinrichtung ebenfalls Ausgangssignale dieser Abstandserfassungseinrichtung auswerten. Es ist jedoch auch vorstellbar, dass die Auswerteeinrichtung einen Abstand in Abhängigkeit von Ausgangssignalen der Erfassungseinrichtung bestimmt.

Der räumliche Abstand kann z.B. nur dann bestimmbar sein, falls das mindestens eine entitätsspezifische Merkmal detektiert wurde.

Weiter ist die mindestens eine Funktion des Identitätsträgers deaktivierbar, falls das entitätsspezifische Merkmal nicht detektiert wurde und/oder der räumliche Abstand größer als ein vorbestimmter Abstand ist. Alternativ ist die mindestens eine Funktion des Identitätsträgers aktivierbar, falls das entitätsspezifische Merkmal detektiert wurde und/oder der räumliche Abstand kleiner als der vorbestimmte oder gleich dem vorbestimmten Abstand ist.

Hierzu kann die Auswerteeinrichtung beispielsweise mit einer weiteren Steuer- und Auswerteeinrichtung daten- oder signaltechnisch verbunden sein, die zur Durchführung der Funktion dient. Selbstverständlich können die Auswerteeinrichtungen auch als eine gemeinsame Auswerteeinrichtung ausgeführt sein. Das vorgeschlagene System ermöglicht hierbei in vorteilhafter Weise die Ausführung eines der vorhergehend erläuterten Verfahren.

In einer bevorzugten Ausführungsform ist die Erfassungseinrichtung als biometrischer Sensor ausgebildet. Hierbei kann der biometrische Sensor auf oder in dem Identitätsträger angeordnet sein. Z.B. kann dieser, wie vorhergehend erläutert, als Geruchssensor oder als optischer Sensor ausgebildet sein.

In einer weiteren Ausführungsform umfasst das System weiter einen Sensorträger, wobei der Sensorträger als vom Identitätsträger verschiedenes Bauteil ausgebildet ist, wobei die mindestens eine Erfassungseinrichtung auf, an oder in dem Sensorträger angeordnet ist.

Hierbei können sowohl der Sensorträger als auch der Identitätsträger geeignete Sendeund/oder Empfangseinrichtungen aufweisen, die eine signal- oder datentechnische Kommunikation, z.B. über Funk, zwischen dem Sensorträger und dem Identitätsträger ermöglichen.

Die Erfindung wird anhand zweier Ausführungsbeispiele näher erläutert. Die Fig. zeigen:
- Fig. 1: eine schematische Darstellung einer ersten Ausführungsform eines erfindungsgemäßen Systems,
- Fig. 2: eine schematische Darstellung einer zweiten Ausführungsform eines erfindungsgemäßen Systems und
- Fig. 3: eine schematische Darstellung einer weiteren Ausführungsform eines erfindungsgemäßen Systems.

Nachfolgend bezeichnen gleiche Bezugszeichen Elemente mit gleichen oder ähnlichen technischen Merkmalen.

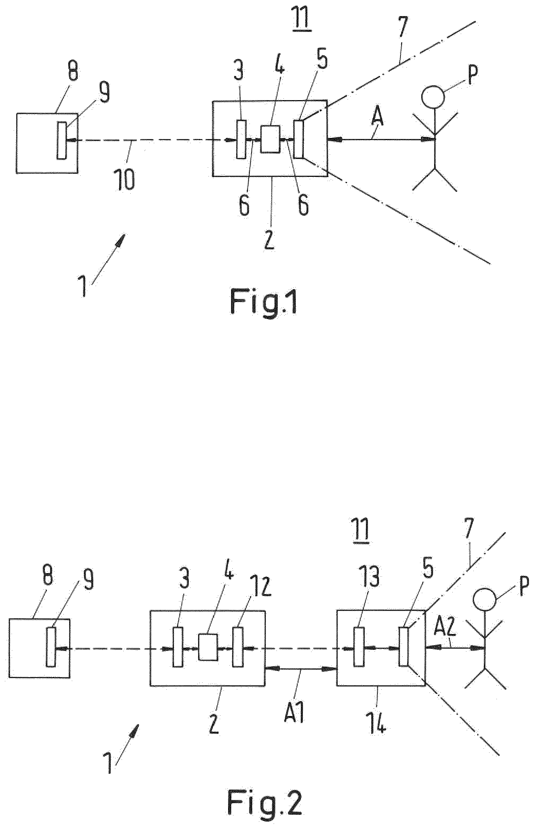

In Fig. 1 ist eine schematische Darstellung eines Systems 1 zur Bereitstellung einer Authentifizierungsfunktion eines Identitätsträgers 2 dargestellt. Das System 1 umfasst den als Sicherheitsdokument ausgebildeten Identitätsträger 2. Der Identitätsträger 2 weist eine erste Sende- und Empfangseinrichtung 3, eine Auswerteeinrichtung 4 und einen Geruchssensor 5 auf. Der Geruchssensor 5 ist hierbei auf dem Identitätsträger 2 angeordnet. Die Einrichtungen 3, 4 und der Geruchssensor 5 sind daten- oder signaltechnisch verknüpft, was durch durchgezogene Linien 6 symbolisiert wird. Der Geruchssensor 5 weist einen durch eine Strichpunktlinie 7 gekennzeichneten Erfassungsbereich auf. In Fig. 1 ist dargestellt, dass sich eine zur Führung des Identitätsträgers 2 autorisierte Person P in dem Erfassungsbereich 7 befindet. Diese ist mit einem Abstand A von dem Geruchssensor 5 und somit von dem Identitätsträger 2 beabstandet. Weiter dargestellt ist eine externe Prüfeinrichtung 8, die eine Sende- und Empfangseinrichtung 9 aufweist. Die Prüfeinrichtung 8 kann hierbei z.B. über Funksignale, die durch eine gestrichelte Linie 10 dargestellt sind, mit dem Identitätsträger 2 kommunizieren. So kann die Prüfeinrichtung 8 eine Authentifizierungsanfrage an den Identitätsträger 2 senden, wobei diese Anfrage von der ersten Sende- und Empfangseinrichtung 3 des Identitätsträgers 2 empfangen und an die Auswerteeinrichtung 4 weitergeleitet wird. Diese aktiviert eine Überwachung eines Umfelds 11 des Identitätsträgers 2 durch den Geruchssensor 5. Der Geruchssensor 5 detektiert einen Körpergeruch der Person P und bestimmt gleichzeitig den Abstand A. Wird z.B. der Körpergeruch der Person P detektiert, so kann in Abhängigkeit von Eigenschaften, insbesondere von Eigenschaften eines Erfassungsbereichs, des Geruchssensors 5 angenommen werden, dass der Abstand A in einem vorbestimmten Wertebereich von Abständen liegt. Der Abstand A kann hierbei insbesondere als der minimale, der mittlere oder der maximale Abstand aus dem vorbestimmten Wertebereich bestimmt werden. Die Auswerteeinrichtung 4 wertet die Ausgangssignale des Geruchssensors 5 aus. Wird der der zur Führung des Identitätsträgers 2 autorisierten Person zugeordnete Körpergeruch von der Auswerteeinrichtung 4 detektiert und ist der Abstand A kleiner als ein vorbestimmter Abstand, beispielsweise kleiner als 0,5 m oder 1 m, so sendet die Auswerteeinrichtung 4 mittels der ersten Sende- und Empfangseinrichtung 3 des Identitätsträgers 2 eine entsprechende Authentifizierungsantwort an die Prüfeinrichtung 8, die von dieser mittels der Sende- und Empfangseinrichtung 9 empfangen wird. Somit wurde die Authentifizierungsfunktion aktiviert. Die Prüfeinrichtung 8 wertet das empfangene Signal aus und kann somit den Identitätsträger 2 authentifizieren. Ist der Abstand A größer als der vorbestimmte Abstand oder entspricht der Körpergeruch der Person P nicht dem Körpergeruch der zur Führung des Identitätsträgers autorisierten Person, so verhindert die Auswerteeinrichtung 4 das Übersenden einer Authentifizierungsantwort oder veranlasst das Senden eines falschen Authentifizierungsantwortsignals. In diesem Fall wurde die Authentifizierungsfunktion deaktiviert, wodurch die Authentifizierung nicht erfolgreich ist.

In Fig. 2 ist eine weitere Ausführungsform eines Systems 1 zur Bereitstellung einer Authentifizierungsfunktion eines Identitätsträgers 2 dargestellt. Im Unterschied zu dem in Fig. 1 dargestellten System 1 weist der Identitätsträger 2 eine erste Sende- und Empfangseinrichtung 3 zur Kommunikation mit einer Sende- und Empfangseinrichtung 9 der externen Prüfeinrichtung 8 und eine weitere Sende- und Empfangseinrichtung 12 zur, z.B. funkbasierten, Kommunikation mit einer Sende- und Empfangseinrichtung 13 eines Sensorträgers 14 auf. Der Sensorträger 14 weist hierbei den Geruchssensor 5 auf. Weiter weist der Sensorträger 14, der als vom Identitätsträger 2 baulich getrenntes Bauteil ausgebildet ist, die Sende- und Empfangseinrichtung 13 auf. Sendet die Prüfeinrichtung 8 über die Sende- und Empfangseinrichtung 9 eine Authentifizierungsanfrage an den Identitätsträger 2, der diese über die erste Sende- und Empfangseinrichtung 3 empfängt, so sendet der Identitätsträger 2 über die zweite Sende- und Empfangseinrichtung 12 ein Aktivierungssignal an den Sensorträger 14, der dieses Aktivierungssignal über die Sendeund Empfangseinrichtung 13 empfängt und eine Überwachung des Umfelds 11 des Sensorträgers 14 durch den Geruchssensor 5 aktiviert. Hierbei wird ein Geruch einer im Erfassungsbereich 7 des Geruchssensors 5 befindlichen Person P erfasst und ein Abstand A2 der Person P von dem Geruchssensor 5 und somit von dem Sensorträger 14 bestimmt. Über die Sende- und Empfangseinrichtung 13 des Sensorträgers 14 werden Signale an den Identitätsträger 2 übertragen, die die vom Geruchssensor 5 erzeugten Ausgangssignale enthalten oder codieren. Die Auswerteeinrichtung 4 wertet diese Ausgangssignale aus und detektiert, ob der Geruch der Person P dem zur Führung des Identitätsträgers 2 autorisierten Person entspricht und ob ein resultierender Abstand, der sich aus einem ersten Abstand A1 vom Identitätsträger 2 zum Geruchssensor 5, also zum Sensorträger 14, und dem Abstand A2 vom Geruchssensor 5 zur Person P zusammensetzt, kleiner als ein vorbestimmter Abstand ist. Es ist jedoch auch möglich, dass nur bestimmt wird, ob der Abstand A2 vom Geruchssensor 5 zur Person P kleiner als der vorbestimmte Abstand ist.

Sind beide Bedingungen erfüllt, so erzeugt die Auswerteeinrichtung 4 eine Authentifizierungsantwort, die mittels der ersten Sende- und Empfangseinrichtung 3 an die Prüfeinrichtung 8 übertragen wird. Der erste Abstand A1 zwischen Identitätsträger 2 und Sensorträger 14 kann z.B. in Abhängigkeit einer Intensität von übertragenen Funksignalen zwischen dem Identitätsträger 2 und dem Sensorträger 14 bestimmt werden. Selbstverständlich sind auch andere Verfahren zur Ermittlung eines Abstandes möglich.

Auch ist vorstellbar, dass der Abstand zwischen dem Identitätsträger 2 und der Person P bzw. zwischen dem Geruchssensor 5 und der Person P sowie zwischen dem Identitätsträger 2 und dem Geruchssensor 5 durch weitere Messverfahren, insbesondere durch von geruchsbasierten Verfahren verschiedene Verfahren, bestimmt wird.

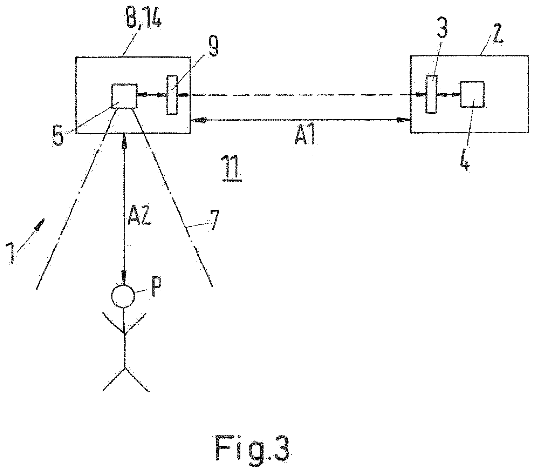

In Fig. 3 ist eine schematische Darstellung einer weiteren Ausführungsform eines erfindungsgemäßen Systems 1 abgebildet. Im Unterschied zu dem in Fig. 2 dargestellten System 1 ist der Geruchssensor 5 in die Prüfeinrichtung 8 integriert, also z.B. an der Prüfeinrichtung 8 angeordnet. In diesem Fall bildet also die Prüfeinrichtung 8 den Sensorträger 14.

Nach Aktivierung einer Authentifizierung, beispielsweise nach Einführung des Identitätsträgers 2 in die als Dokumentenprüfgerät ausgebildete Prüfeinrichtung 8, wird eine Überwachung des Umfelds 11 der Prüfeinrichtung 8 durch den Geruchssensor 5 aktiviert und eine Authentifizierungsanfrage von der Prüfeinrichtung 8 über die Sendeund Empfangseinrichtung 9 an den Identitätsträger 2 gesendet, der diese über die erste Sende- und Empfangseinrichtung 3 empfängt.

Weiter wird ein Geruch einer im Erfassungsbereich 7 des Geruchssensors 5 befindlichen Person P erfasst und ein Abstand A2 der Person P von dem Geruchssensor 5 und somit von der Prüfeinrichtung 14 bestimmt. Über die Sende- und Empfangseinrichtung 9 und die Sende- und Empfangseinrichtung 3 werden Ausgangssignale des Geruchssensors 5 an den Identitätsträger 2 übertragen, die die vom Geruchssensor 5 erzeugten Ausgangssignale enthalten oder codieren. Insbesondere werden Ausgangssignale des Geruchssensors 5 nicht von der Prüfeinrichtung 8 ausgewertet sondern ausschließlich weitergeleitet. Die Auswerteeinrichtung 4 wertet diese Ausgangssignale aus und detektiert, ob der Geruch der Person P dem Geruch der zur Führung des Identitätsträgers 2 autorisierten Person entspricht und ob der Abstand A2 vom Geruchssensor 5 zur Person P kleiner als der vorbestimmte Abstand ist.

Sind beide Bedingungen erfüllt, so erzeugt die Auswerteeinrichtung 4 eine Authentifizierungsantwort, die mittels der ersten Sende- und Empfangseinrichtung 3 an die Prüfeinrichtung 8 übertragen wird.

Selbstverständlich kann, wie vorhergehend in Bezug auf Fig. 2 erläutert, zusätzlich noch der Abstand A1 vom Identitätsträger 2 zum Geruchssensor 5 bestimmt und ausgewertet werden.

## Patentansprüche

1. Verfahren zur Bereitstellung mindestens einer Funktion eines Identitätsträgers (2), wobei eine zur Führung des Identitätsträgers autorisierte Entität mindestens ein entitätsspezifisches Merkmal aufweist, wobei mindestens eine Erfassungseinrichtung einen der Erfassungseinrichtung zugeordneten Erfassungsbereich (7) auf zumindest ein entitätsspezifisches Merkmal hin überwacht, wobei mindestens eine Funktion des Identitätsträgers (2) deaktiviert wird, falls das mindestens eine entitätsspezifische Merkmal nicht detektiert wurde,
**dadurch gekennzeichnet, dass**
ein räumlicher Abstand (A2) zwischen der Erfassungseinrichtung und der Entität bestimmt wird, wobei ein einzelner Wert oder Wertebereich des Abstands bestimmt wird, wobei die mindestens eine Funktion des Identitätsträgers (2) deaktiviert wird, falls das mindestens eine entitätsspezifische Merkmal nicht detektiert wurde und der räumliche Abstand (A, A2) größer als ein vorbestimmter Abstand ist oder falls der räumliche Abstand (A, A2) größer als ein vorbestimmter Abstand ist, wobei die mindestens eine Funktion des Identitätsträgers (2) aktiviert wird, falls das mindestens eine entitätsspezifische Merkmal detektiert wurde und der räumliche Abstand (A, A2) kleiner als der vorbestimmte Abstand oder gleich dem vorbestimmten Abstand ist, wobei eine Abstandserfassungseinrichtung gleich der Erfassungseinrichtung ist, wobei die Erfassungseinrichtung auf, in oder an dem Identitätsträger (2) angeordnet ist, wobei der räumliche Abstand zwischen der Erfassungseinrichtung und der Entität dem räumlichen Abstand zwischen dem Identitätsträger (2) und der Entität entspricht.

2. Verfahren nach Anspruch 1, **dadurch gekennzeichnet, dass** eine Authentifizierungsfunktion des Identitätsträgers deaktiviert wird, falls das mindestens eine entitätsspezifische Merkmal nicht detektiert wurde und/oder der räumliche Abstand (A, A2) größer als ein vorbestimmter Abstand ist.

3. Verfahren nach Anspruch 1 oder 2, **dadurch gekennzeichnet, dass** mittels der Erfassungseinrichtung mindestens ein biometrisches Merkmal erfasst wird.

4. Verfahren nach Anspruch 3, **dadurch gekennzeichnet, dass** das mindestens eine biometrische Merkmal geruchsbasiert erfasst wird.

5. Verfahren nach Anspruch 3, **dadurch gekennzeichnet, dass** das mindestens eine biometrische Merkmal optisch erfasst wird.

6. Verfahren nach einem der Ansprüche 1 bis 5, **dadurch gekennzeichnet, dass** eine Überwachung kontinuierlich oder nach einer Aktivierung erfolgt.

7. System zur Bereitstellung mindestens einer Funktion eines Identitätsträgers (2), wobei das System (1) mindestens einen Identitätsträger (2), mindestens eine Erfassungseinrichtung und mindestens eine Auswerteeinrichtung (4) umfasst, wobei mittels der mindestens einen Erfassungseinrichtung ein der Erfassungseinrichtung zugeordneter Erfassungsbereich (7) auf zumindest ein entitätsspezifisches Merkmal hin überwachbar ist, wobei das entitätsspezifische Merkmal einer zur Führung des Identitätsträgers (2) autorisierten Entität zugeordnet ist, wobei mittels der Auswerteeinrichtung (4) das mindestens eine entitätsspezifische Merkmal detektierbar ist, wobei eine Funktion des Identitätsträgers (2) deaktivierbar ist, falls das entitätsspezifische Merkmal nicht detektiert wurde,
**dadurch gekennzeichnet, dass**
ein räumlicher Abstand (A2) zwischen der Erfassungseinrichtung und der Entität bestimmbar ist, wobei ein einzelner Wert oder Wertebereich des Abstands bestimmbar ist, wobei die Funktion des Identitätsträgers (2) deaktivierbar ist, falls das entitätsspezifische Merkmal nicht detektiert wurde und der räumliche Abstand (A, A2) größer als ein vorbestimmter Abstand ist oder falls der räumliche Abstand (A, A2) größer als ein vorbestimmter Abstand ist, wobei die Funktion des Identitätsträgers (2) aktivierbar ist, falls das entitätsspezifische Merkmal detektiert wurde und der räumliche Abstand (A, A2) kleiner als der vorbestimmte oder gleich dem vorbestimmten Abstand ist, wobei eine Abstandserfassungseinrichtung gleich der Erfassungseinrichtung ist, wobei die Erfassungseinrichtung auf, in oder an dem Identitätsträger (2) angeordnet ist, wobei der räumliche Abstand zwischen der Erfassungseinrichtung und der Entität dem räumlichen Abstand zwischen dem Identitätsträger (2) und der Entität entspricht.

8. System nach Anspruch 7, **dadurch gekennzeichnet, dass** die Erfassungseinrichtung als biometrischer Sensor ausgebildet ist.

## Claims

1. Method for providing at least one function of an identity medium (2), wherein an entity that is authorised to carry the identity medium has at least one entity-specific feature, wherein at least one sensing device monitors a sensing region (7), associated with the sensing device, for at least one entity-specific feature, wherein at least one feature of the identity medium (2) is deactivated if the at least one entity-specific feature has not been detected,
**characterised in that**
a spatial distance (A2) between the sensing device and the entity is determined, wherein a single value or value range of the distance is determined, wherein the at least one function of the identity medium (2) is deactivated if the at least one entity-specific feature has not been detected and the spatial distance (A, A2) is greater than a predetermined distance, or if the spatial distance (A, A2) is greater than a predetermined distance, wherein the at least one function of the identity medium (2) is activated if the at least one identity-specific feature has been detected and the spatial distance (A, A2) is smaller than the predetermined distance or equal to the predetermined distance, wherein a distance sensing device is equal to the sensing device, wherein a distance sensing device is arranged on, in, or at the identity medium (2), and wherein the spatial distance between the sensing device and the entity corresponds to the spatial distance between the identity medium (2) and the entity.

2. Method according to claim 1, **characterised in that** an authentication function of the identity medium is deactivated if the at least one entity-specific feature has not been detected and/or the spatial distance (A, A2) is greater than a predetermined distance.

3. Method according to claim 1 or 2, **characterised in that** at least one biometric feature is detected by means of the sensing device.

4. Method according to claim 3, **characterised in that** the at least one biometric feature is detected on the basis of smell.

5. Method according to claim 3, **characterised in that** the at least one biometric feature is detected optically.

6. Method according to any of claims 1 to 5, **characterised in that** monitoring is carried out continuously or after an activation.

7. System for providing at least one function of an identity medium (2), wherein the system (1) comprises at least one identity medium (2), at least one sensing device, and at least one evaluation device (4), wherein, by means of the at least one sensing device, a sensing region (7) associated with the sensing device can be monitored for at least one entity-specific feature, wherein the entity-specific feature is assigned to an entity which is authorised to carry the identity medium (2), wherein, by means of the evaluation device (4), the at least one entity-specific feature can be detected, and wherein a function of the identity medium (2) can be deactivated if the entity-specific feature has not been detected,
**characterised in that**
a spatial distance (A2) can be determined between the sensing device and the entity, wherein a single value or value range of the distance can be determined, wherein the function of the identity medium (2) can be deactivated if the entity-specific feature has not been detected, and the spatial distance (A, A2) is greater than a predetermined distance, or if the spatial distance (A, A2) is greater than a predetermined distance, wherein the function of the identity medium (2) can be activated if the entity-specific feature has been detected and the spatial distance (A, A2) is smaller than or equal to the predetermined distance, wherein a distance sensing device is equal to the sensing device, wherein the sensing device is arranged on, in, or at the identity medium (2), and wherein the spatial distance between the sensing device and the entity corresponds to the spatial distance between the identity medium (2) and the entity.

8. System according to claim 7, **characterised in that** the sensing device is configured as a biometric sensor.

## Revendications

1. Procédé servant à fournir au moins une fonction d'un support d'identité (2), dans lequel une entité autorisée à piloter le support d'identité présente au moins une caractéristique spécifique à l'entité, dans lequel au moins un dispositif de détection surveille la présence d'au moins une caractéristique spécifique à l'entité d'une zone de détection (7) associée au dispositif de détection, dans lequel au moins une fonction du support d'identité (2) est désactivée si l'au moins une caractéristique spécifique à l'entité n'a pas été détectée,
**caractérisé en ce que**
une distance spatiale (A2) entre le dispositif de détection et l'entité est déterminée, dans lequel une unique valeur ou plage de valeurs de la distance est déterminée, dans lequel l'au moins une fonction du support d'identité (2) est désactivée si l'au moins une caractéristique spécifique à l'entité n'a pas été détectée et la distance spatiale (A, A2) est supérieure à une distance prédéfinie ou si la distance spatiale (A, A2) est supérieure à une distance prédéfinie, dans lequel l'au moins une fonction du support d'identité (2) est activée si l'au moins une caractéristique spécifique à l'entité a été détectée et la distance spatiale (A, A2) est inférieure à la distance prédéfinie ou est égale à la distance prédéfinie, dans lequel un dispositif de détection de distance est identique au dispositif de détection, dans lequel le dispositif de détection est disposé sur, dans ou au niveau du support d'identité (2), dans lequel la distance spatiale entre le dispositif de détection et l'entité correspond à la distance spatiale entre le support d'identité (2) et l'entité.

2. Procédé selon la revendication 1, **caractérisé en ce qu'**une fonction d'authentification du support d'identité est désactivée si l'au moins une caractéristique spécifique à l'entité n'a pas été détectée et/ou la distance spatiale (A, A2) est supérieure à une distance prédéfinie.

3. Procédé selon la revendication 1 ou 2, **caractérisé en ce qu'**au moins une caractéristique biométrique est détectée au moyen du dispositif de détection.

4. Procédé selon la revendication 3, **caractérisé en ce que** l'au moins une caractéristique biométrique est détectée sur la base d'odeurs.

5. Procédé selon la revendication 3, **caractérisé en ce que** l'au moins une caractéristique biométrique est détectée de manière optique.

6. Procédé selon l'une quelconque des revendications 1 à 5, **caractérisé en ce qu'**une surveillance est effectuée en continu ou après une activation.

7. Système servant à fournir au moins une fonction d'un support d'identité (2), dans lequel le système (1) comprend au moins un support d'identité (2), au moins un dispositif de détection et au moins un dispositif d'évaluation (4), dans lequel la présence d'au moins une caractéristique spécifique à l'entité d'une zone de détection (7) associée au dispositif de détection peut être surveillée au moyen de l'au moins un dispositif de détection, dans lequel la caractéristique spécifique à l'entité est associée à une entité autorisée pour piloter le support d'identité (2), dans lequel l'au moins une caractéristique spécifique à l'entité peut être détectée au moyen du dispositif d'évaluation (4), dans lequel une fonction du support d'identité (2) peut être désactivée si la caractéristique spécifique à l'entité n'a pas été détectée,
**caractérisé en ce que**
la distance spatiale (A2) entre le dispositif de détection et l'entité peut être déterminée, dans lequel une unique valeur ou plage de valeurs de la distance peut être déterminée, dans lequel la fonction du support d'identité (2) peut être désactivée si la caractéristique spécifique à l'entité n'a pas été détectée et la distance spatiale (A, A2) est supérieure à une distance prédéfinie ou si la distance spatiale (A, A2) est supérieure à une distance prédéfinie, dans lequel la fonction du support d'identité (2) peut être activée si la caractéristique spécifique à l'entité a été détectée et la distance spatiale (A, A2) est inférieure à la distance prédéfinie ou est égale à la distance prédéfinie, dans lequel un dispositif de détection de distance est identique au dispositif de détection, dans lequel le dispositif de détection est disposé sur, dans ou au niveau du support d'identité (2), dans lequel la distance spatiale entre le dispositif de détection et l'entité correspond à la distance spatiale entre le support d'identité (2) et l'entité.

8. Système selon la revendication 7, **caractérisé en ce que** le dispositif de détection est réalisé en tant que capteur biométrique.
